# EUROPÄISCHE PATENTSCHRIFT

(11) **EP 3 538 939 B1**
(45) Veröffentlichungstag und Bekanntmachung des Hinweises auf die Patenterteilung: **26.08.2026**
(21) Anmeldenummer: 17797926.7
(22) Anmeldetag: 10.11.2017
(51) Int. Cl.: G02B 21/00, G02B 21/06

(54) **BELEUCHTUNGSANORDNUNG UND VERFAHREN FÜR DIE BELEUCHTUNG IN EINEM MIKROSKOP UND MIKROSKOP**
ILLUMINATION ARRANGEMENT AND METHOD FOR ILLUMINATION IN A MICROSCOPE AND MICROSCOPE
SYSTÈME D'ÉCLAIRAGE ET PROCÉDÉ D'ÉCLAIRAGE DANS UN MICROSCOPE AINSI QUE MICROSCOPE

(30) Priorität: 11.11.2016 DE 102016121626; 02.12.2016 LU 93332
(43) Veröffentlichungstag der Anmeldung: 18.09.2019
(73) Patentinhaber: Leica Microsystems CMS GmbH, 35578 Wetzlar (DE)
(72) Erfinder: FAHRBACH, Florian, 68167 Mannheim (DE)
(74) Vertreter: Schaumburg und Partner Patentanwälte mbB
(86) Internationale Anmeldenummer: PCT/EP2017/078929
(87) Internationale Veröffentlichungsnummer: WO 2018/087312

(56) Entgegenhaltungen:
- EP-A1- 2 657 747
- EP-A1- 3 081 975
- WO-A1-2014/026683
- WO-A1-2014/026683
- WO-A1-2014/026683
- WO-A1-2017/220699
- WO-A1-2017/220699
- DE-A1- 102007 063 274
- DE-U1- 202009 008 281
- DE-U1- 202009 008 281
- JP-A- H07 335 526
- JP-A- H07 335 526
- US-A1- 2013 229 665
- US-A1- 2013 229 665
- US-B2- 7 709 809

## Beschreibung

Die Erfindung betrifft eine Beleuchtungsanordnung für ein Lichtblatt- oder SPIM-Mikroskop oder ein Schiefeebenemikroskop wie ein OPM oder SCAPE- Mikroskop, umfassend einen Beleuchtungseingang zur Einspeisung eines Beleuchtungsstrahlenbündels und einen Beleuchtungsausgang zur Ausgabe von mindestens zwei aus dem Beleuchtungsstrahlenbündel generierten Teilstrahlenbündel, wobei die Beleuchtungsanordnung mindestens ein beugendes optisches Bauelement zur Teilung des Beleuchtungsstrahlenbündels in die mindestens zwei entlang von Teilstrahlengängen propagierende Teilstrahlenbündel und zur relativen Änderung der Propagationsrichtungen der mindestens zwei Teilstrahlenbündel zueinander umfasst, so dass die von der Beleuchtungsanordnung ausgegebenen mindestens zwei Teilstrahlenbündel am Ausgang nichtkollinear zueinander verlaufen, wobei die Beleuchtungsanordnung eine Dekohärenzvorrichtung zur Verringerung der Kohärenz des Lichtes der Teilstrahlenbündel zueinander umfasst und das beugende optische Bauelement mindestens ein Gitter aufweist, welches als Dichtegitter in einem kristallinen Medium oder Glas ausgebildet ist. Ferner betrifft die vorliegende Erfindung ein Lichtblatt- oder SPIM-Mikroskop oder ein Schiefeebenemikroskop wie ein OPM oder SCAPE-Mikroskop und ein Verfahren zur homogenen Ausleuchtung einer Probe in einem solchen Mikroskop.

Unter einem Lichtblatt ist ein beleuchteter Bereich zu verstehen, der sich im Wesentlichen entlang zwei senkrecht zueinander orientierten Raumrichtungen, einer Längen- und Breitenrichtung, erstreckt, wobei die Erstreckung des beleuchteten Bereiches entlang einer senkrecht zu den beiden Raumrichtungen orientierten Dickenrichtung bevorzugt mehrere Größenordnungen kleiner als die Erstreckung entlang der Breiten- bzw. Längenrichtung des Lichtblattes. Im Allgemeinen wird ein solches Lichtblatt durch die Fokussierung eines kollimierten Lichtstrahls entlang lediglich einer transversalen Ausdehnung des Lichtstrahls erzielt. Hierfür können zum Beispiel Zylinderlinsen, achromatische Zylinderlinsen oder asphärische Zylinderlinsen, wie eine sogenannte Powell-Linse verwendet werden.

In einem Mikroskop mit Probenbeleuchtung in einer Ebene, wie zum Beispiel einem Lichtblattoder SPIM-Mikroskop, einem Schiefeebenemikroskop (OPM) oder SCAPE-Mikroskop wird ein solches Lichtblatt zur Beleuchtung einer Beleuchtungsebene in einer Probe verwendet, wobei ein Ausbleichen (photobleaching) bzw. eine Beschädigung der Probe vermieden wird, da außerhalb der beleuchteten Beleuchtungsebene keine Strahlungsenergie in die Probe eingebracht wird.

Ein Strahlenbündel ist als Modellvorstellung des propagierenden Lichtes anzusehen, wobei das Strahlenbündel entlang einer Propagationsrichtung propagiert und eine räumliche Ausdehnung senkrecht zur Propagationsrichtung aufweist. Üblicherweise weist ein Strahlenbündel, insbesondere ein von Laserlichtquellen ausgesandtes Strahlenbündel, ein rotationssymmetrisches gaussförmiges transversales Strahlprofil auf. Mögliche andere Strahlprofile sind zum Beispiel besselstrahlförmig bzw. hat-top-förmig.

Bei der Untersuchung von heterogenen Proben mit einem Lichtblatt- bzw. SPIM-Mikroskop kann die Streuung und Interferenz des Beleuchtungslichtes die Bildqualität stark verschlechtern. Die Anregung von Fluorophoren in der Probe geschieht mittels Licht, welches zu einem Lichtblatt geformt ist. Ein Lichtblatt kann als Lichtbündel verstanden werden, welches in einer zur Propagationsrichtung des Lichtbündels senkrecht orientierten Richtung fokussiert ist und somit im Wesentlichen lediglich in einer Beleuchtungsebene ausgebildet ist und diese beleuchtet. Die Beleuchtungsebene liegt bevorzugt in der Fokusebene eines Detektionsobjektives, mit welchem das Streu- bzw. Fluoreszenzlicht detektiert wird.

Bei Beleuchtung mit einem Lichtblatt können sich hinter stark streuenden bzw. absorbierenden Elementen der Probe deutlich sichtbare streifenförmige Schatten ausbilden.

Im Stand der Technik wird einer solchen Schattenbildung entgegengewirkt, indem mit einem mechanischen Bauteil, zum Beispiel einem kippbaren Spiegel, das Lichtblatt sequenziell verkippt wird. Diese Lösungen haben den Nachteil, dass die mechanischen Komponenten verschleißen, was die Lebensdauer derartiger Beleuchtungsanordnungen stark mindert.

Die maximal erreichbaren Frequenzen der Belichtung sind bei der sequenziellen Beleuchtung der Probe aus unterschiedlichen Richtungen gemäß dem Stand der Technik limitiert. Dies spielt insbesondere eine Rolle, wenn ein sogenanntes virtuelles Lichtblatt zur Beleuchtung der Probe verwendet wird, also der Beleuchtungs-Strahl (zum Beispiel Gauss-, Bessel-, Mathieu- und Airy-Strahl) in der Probe fokussiert und während der Belichtungszeit der Kamera über das Bildfeld gescannt wird. Hier, ebenso wie bei Verwendung schneller Detektoren mit Bildaufnahmegeschwindigkeiten im Bereich bzw. schneller als die Frequenz des mechanischen Bauteils kann keine Mittelung der sequenziell aus unterschiedlichen Richtungen beleuchteten Bereiche mehr erfolgen, wodurch der Effekt der Schattenminderung reduziert wird. Bei einem typischerweise für schnelle Ablenkungen verwendeten resonanten Kippspiegel wird das Licht nicht gleichmäßig aus alle Richtungen in die Probe gestrahlt, da der Spiegel eine winkelabhängige Geschwindigkeit aufweist, zum Beispiel einer Sinus-Funktion folgt, und an den Umkehrpunkten abbremst und umkehrt.

In der DE 10 2007 063 274 A1 und der EP 3 081 975 A1 sind Lichtblattmikroskope gezeigt, welche diffraktive Elemente aufweisen, um eine Probe aus unterschiedlichen Richtungen zu beleuchten. Die WO 2014/026 683 A1 zeigt eine optische Anordnung in einem Mikroskop mit einer Teilungseinrichtung zur Aufteilung eines Beleuchtungsstrahls in mindestens zwei Teilbündel zur Beleuchtung einer zu beobachtenden Ebene. Die US 7,709,809 B2 zeigt ein Mikroskop mit verbesserter Auflösung durch räumliche Überlagerung eines Anregungsstrahls mit einem Abregungsstrahl, wobei zwei Abregungsstrahlen vorgesehen sein können, die gegeneinander verzögert sein können. In der EP 2 657 747 A1 ist ein 4Pi STED Fluoreszenzlichtmikroskop mit hoher dreidimensionaler räumlicher Auflösung gezeigt.

Ferner betrifft die Druckschrift DE 20 2009 008 281 U1 eine optische Anordnung zur hochfrequenten Pulsmodulation von Dauerstrichlasern. Ein cw-Laser für STED in einer Anordnung wird so moduliert, dass nach dieser Anordnung die maximalen Pulsintensitäten des Strahls höher sind, als die mittlere Intensität des ursprünglichen cw-Strahls.

Die Druckschrift JP 7133526 A offenbart einen Positionsdetektor und ein akusto-optisches Modulationselement für die Verwendung mit dem Positionsdetektor.

Die Druckschrift US 2013/0229665 A1 offenbart ein Strukturiertes-Beleuchtungslicht-Mikroskopiegerät.

Aufgabe der vorliegenden Erfindung ist es, eine verbesserte Beleuchtungsanordnung für ein Mikroskop, insbesondere ein Lichtblatt- oder SPIM-Mikroskop oder ein Schiefeebenemikroskop wie ein DPM oder SCAPE-Mikroskop zu schaffen, das eine homogene Beleuchtung ermöglicht.

Die vorliegende Aufgabe wird durch den Anspruchsgegenstand von Anspruch 1 gelöst.

Bevorzugte Ausgestaltungen sind in den abhängigen Ansprüchen definiert.

Aufgrund der nichtkollinearen Propagation der mindestens zwei Teilstrahlenbündel unterscheiden sich auch die Propagationsrichtungen der mindestens zwei Teillichtblätter in der Probe. Dies hat den Vorteil, dass stark absorbierende bzw. streuende Bereiche der Probe aus unterschiedlichen Richtungen beleuchtet werden können, so dass eine Schattenbildung hinter den stark absorbierenden bzw. stark streuenden Bereichen der Probe verringert bzw. gänzlich vermieden werden kann.

Ferner stellt die Verwendung eines beugenden optischen Bauelements eine einfach zu realisierende Möglichkeit einer multidirektionalen Beleuchtung der Probe dar, wobei gänzlich auf störanfällige und unter Umständen vibrationsübertragende mechanisch bewegte Bauelemente verzichtet werden kann. Der Verzicht auf mechanische Bauelemente ermöglicht hohe Belichtungsfrequenzen bei hoher Lebensdauer.

Die erfindungsgemäße Beleuchtungsanordnung, das erfindungsgemäße Mikroskop und das erfindungsgemäße Verfahren können durch die folgenden, jeweils für sich vorteilhaften und beliebig miteinander kombinierbaren Merkmale weiter verbessert werden.

Unter einem beugenden optischen Bauelement ist insbesondere ein einzelnes Element, d.h. keine mehrere Elemente umfassende Baugruppe, zu verstehen. Am beugenden optischen Bauelement tritt Beugung von einfallendem Licht eines Strahlenbündels auf, so dass das Beleuchtungsstrahlenbündel in mindestens zwei Teilstrahlenbündel geteilt wird. Die Beugung geschieht bevorzugt an optischen Elementen mit sich im Wesentlichen räumlich periodisch ändernden Propagationsbedingungen des Lichts.

Hierbei können die mindestens zwei Teilstrahlenbündel in einem Teil ihrer Eigenschaften identisch zueinander sein oder verschiedene Parameter aufweisen. Insbesondere können die Intensitäten des Lichtes der mindestens zwei Teilstrahlenbündel separat eingestellt werden. Sie können zum Beispiel auch identisch bzw. ähnlich zueinander sein.

Die mindestens zwei Teilstrahlenbündel können am Ausgang der Beleuchtungsanordnung parallel zueinander und zueinander senkrecht zur Propagationsrichtung versetzt ausgebildet sein oder aber unter einem Winkel zueinander propagieren.

Die von den Teilstrahlenbündeln aufgespannte Ebene bzw. die Ebene, in welcher beide Teilstrahlenbündel liegen, entspricht dabei in einem entfalteten Strahlengang im Wesentlichen der Beleuchtungsebene.

Der Beleuchtungsanordnung kann ein Lichtblattgenerator nachgeschaltet sein, so dass die den Beleuchtungsausgang verlassenden Teilstrahlenbündel in den Lichtblattgenerator eingespeist und von diesem in mindestens zwei Teillichtblätter transformiert werden können. Wie oben beschrieben erfolgt die Transformation der Teillichtblätter bevorzugt mittels einer geeigneten Zylinderlinse. Die Zylinderlinse kann sich bereits vor der Beleuchtungsanordnung befinden, so dass der Lichtblattgenerator ein linienförmiges Zwischenbild der mindestens zwei Teilstrahlenbündel in die jeweiligen Teillichtblätter transformiert.

Der Lichtblattgenerator kann auch ausgestaltet sein, ein zuvor beschriebenes virtuelles Lichtblatt zu erzeugen. Dieses entsteht durch eine Scanbewegung einzelner Teilstrahlenbündel mittels mindestens einer Scanvorrichtung wie zum Beispiel einem Scanspiegel. Im erfindungsgemäßen Verfahren können die Teilstrahlenbündel, die aus verschiedenen Richtungen in die Probe eingestrahlt werden beispielsweise symmetrische Gauss-Strahlen oder andere Strahlen sein. Diese können in den Lichtblattgenerator eingespeist werden und Teillichtblätter erzeugen. Die Teillichtblätter können auch als virtuelle Teillichtblätter ausgebildet sein, indem ein Scanelement die Propagationsrichtung der Teilstrahlenbündel scannt und beispielsweise den Fokus jedes Teilstrahlenbündels über und/oder durch die Probe rastert oder bewegt.

So kann das Streu- bzw. Fluoreszenzlicht mittels einer senkrecht zur Beleuchtungsebene orientierten Beobachtungsoptik aufgefangen werden, auf einem Detektor abgebildet und bevorzugt einer weiteren Bildbearbeitung zur Verfügung gestellt werden.

Die erfindungsgemäße Beleuchtungsanordnung kann mittels eines geeigneten Scanspiegels in das Mikroskop integriert sein. Dies erlaubt zum einen einen kompakten Aufbau des Mikroskopstrahlenganges und kann verhindern, dass der Untersuchungsbereich für die Probe durch die Probenbeleuchtung eingeschränkt wird. Andererseits erlaubt ein solcher Scanspiegel den Aufbau eines virtuellen Lichtblattes und/oder das Scannen eines Lichtblattes in und/oder durch die Probe.

Die Beleuchtungsanordnung kann Blenden unterschiedlicher Funktion, zum Beispiel Feld- und Aperturblenden aufweisen, so dass weitere Parameter, zum Beispiel die Dicke des Lichtblattes, veränderbar sind. Diese Blenden können als separate und variable Bauelemente vorgesehen sein bzw. durch Optiken der Beleuchtungsanordnung gebildet werden. Ferner kann in einem die Beleuchtungsanordnung enthaltenden Mikroskop ein Scanspiegel vorgesehen sein, der alle Strahlen eines Reflektionsstrahlenganges in der hinteren, d.h. dem Objektiv bzw. der Probe gegenüberliegenden Brennebene des Objektivs gemeinsam um den gleichen Winkel verkippt.

Das beugende optische Bauelement der Beleuchtungsanordnung weist mindestens ein Gitter auf. Gitter sind mit unterschiedlichen Parametern erhältlich. Ein möglicher Designparameter ist zum Beispiel das Verhältnis der Intensitäten oder ein Winkel unterschiedlicher Beugungsordnungen zueinander.

Die Beleuchtungsanordnung bildet das mindestens eine Gitter als Dichtegitter in einem kristallinem Medium oder Glas aus. Das Dichtegitter kann als periodische Anordnung komprimierter Bereiche als Folge einer akustischen Welle, welche im kristallinen Medium bzw. Glas propagiert, verstanden werden.

Auch das Dichtegitter stellt ein beugendes optisches Bauelement dar, da die an einem solchen Dichtegitter auftretende Bragg-Reflexion ebenso wie die Beugung an einem optischen Gitter auf dem Huygensschen Prinzip beruht.

In einer vorteilhaften Ausgestaltung der erfindungsgemäßen Beleuchtungsanordnung ist eine einzelne gepulste Lichtquelle vorgesehen, an deren Ausgang ein gepulstes Beleuchtungsstrahlenbündel ausgegeben und in den Beleuchtungseingang eingespeist wird.

Das beugende optische Bauelement erzeugt aus dem gepulsten Beleuchtungsstrahlenbündel mindestens zwei synchron gepulste Teilstrahlenbündel.

Eine gepulste Lichtquelle hat den Vorteil, dass einem Ausbleichen der Probe, insbesondere der Fluorophore, die durch das Licht der Lichtquelle angeregt werden und Fluoreszenzlicht ausstrahlen, vorgebeugt werden kann. Die Anregung, d.h. Beleuchtung in der Beleuchtungsebene erfolgt lediglich während einer Impulsdauer der gepulsten Lichtquelle, wobei die einzelnen Lichtimpulse mit einer Pulsfolgefrequenz erzeugt werden und mit dieser Pulsfolgefrequenz die Probe beleuchten.

Somit kann, neben dem Ausbleichen, auch eine Erwärmung der Probe durch Absorption des Lichtes des Beleuchtungsstrahlenbündels verhindert werden. Dies ist besonders bei in vivo mikroskopierten Proben essentiell, da es bei diesen erwünscht ist, eine Störung der Probe durch das Mikroskopieren so gering wie möglich zu halten.

Ferner ist es möglich mit gepulster Anregung und der bei kurzen Impulsen auftretenden Pulsspitzenleistung intensitätsabhängige, zumeist nichtlineare Prozesse effizient anzuregen.

Als gepulste Lichtquellen können insbesondere Laserlichtquellen verwendet werden, da mit diesen eine wellenlängenselektive Anregung der in der Probe vorhandenen bzw. zusätzlich in die Probe eingebrachten Fluorophore möglich ist. Die Laserlichtquelle kann im sogenannten Dauerstrichbetrieb (cw) betrieben und mittels eines mechanischen Modulators, zum Beispiel einem Chopper, moduliert werden.

Bevorzugt kann ein gepulster Laser verwendet werden. Der gepulste Laser kann ein gütegeschalteter (Q-Switch) bzw. ein modengekoppelter Laser sein. Impulsdauern eines gütegeschalteten Lasers liegen im Allgemeinen im Nanosekundenbereich, wohingegen mit einem modengekoppelten Laser Pulsdauern bis in den Femtosekundenbereich möglich sind. Die verwendeten gepulsten Laserlichtquellen können geeignete Elemente zur Frequenzkonversion aufweisen, d.h. zum Beispiel frequenzverdoppelt oder frequenzvervielfacht sein.

Die Verwendung einer einzelnen Lichtquelle hat den Vorteil, dass lediglich diese und nicht eine Vielzahl von Lichtquellen angesteuert, betrieben und überwacht werden muss.

In einer weiteren Ausgestaltung der erfindungsgemäßen Beleuchtungsanordnung ist jedes der mindestens zwei Teilstrahlenbündel durch eine unterschiedliche, durch das beugende optische Bauelement erzeugte Beugungsordnung des Lichtes des Beleuchtungsstrahlenbündels geformt.

Da die unterschiedlichen Beugungsordnungen eines Gitters räumlich voneinander getrennt sind, können somit auf einfache Weise die mindestens zwei Teilstrahlenbündel voneinander getrennt werden.

Die unterschiedlichen Beugungsordnungen können insbesondere die nullte Beugungsordnung, d.h. den in seiner Propagationsrichtung unveränderten Teil des Beleuchtungsstrahlenbündels umfassen.

In den höheren Beugungsordnungen, d.h. der ersten, zweiten, etc. Beugungsordnung kann zudem eine spektrale Aufspaltung der Lichtquelle erfolgen. Insbesondere Kurzpulslaser weisen eine Breitbandigkeit auf, die invers proportional zur Pulsdauer ist.

Ein Gitter beaufschlagt eine breitbandige Lichtquelle in den höheren Beugungsordnungen mit einer Winkeldispersion, d.h. einer wellenlängenabhängigen Propagationsrichtung einzelner Frequenzen bzw. Wellenlängen, so dass keine diskrete Anzahl von Lichtblättern erzeugt wird, sondern eine Art kontinuierlicher "Fächer" von Lichtblättern erzeugt und zur Beleuchtung der Probe verwendet werden kann. Dabei kann die Beleuchtungsrichtung proportional zur spektralen Verschiebung gegenüber einer mittleren Wellenlänge sein.

In der erfindungsgemäßen Beleuchtungsanordnung ist eine Dekohärenzvorrichtung zur Verringerung der Kohärenz des Lichtes der Teilstrahlenbündel zueinander vorgesehen. Die Verwendung einer Dekohärenzvorrichtung hat den Vorteil, dass die aus verschiedenen Richtungen eingestrahlten Teillichtblätter, bzw. deren Licht in der Beleuchtungsebene nicht miteinander interferiert. Somit können Interferenzstreifen, d.h. lokale, stationäre und zeitliche stabile Beleuchtungsmaxima und Beleuchtungsminima in der Beleuchtungsebene vermieden und eine homogene Beleuchtung der Probe erreicht werden.

Im Folgenden werden die Begriffe Kohärenz und Dekohärenz verwendet. Diese sind nicht als Kohärenz oder Dekohärenz quantenmechanischer Systeme, sondern als optische Kohärenz oder Dekohärenz zu verstehen.

Zwei in einer festen Phasenbeziehung zueinander stehende Lichtwellen gleicher Frequenz sind kohärent und können interferieren, wobei ein zeitlich konstantes Interferenzmuster entsteht. Bei zueinander inkohärenten Quellen mitteln sich konstruktive und destruktive Interferenz einzelner zeitlich und räumlich begrenzter Wellenzüge hingegen heraus, so dass keine zeitlich konstanten Interferenzmuster beobachtet werden können. Man unterscheidet zwischen räumlicher und zeitlicher Kohärenz. Weist eine räumlich ausgedehnte Lichtquelle räumliche Kohärenz auf, so können Lichtanteile aus unterschiedlichen Bereichen der Lichtquelle miteinander interferieren. Bei einer Laserlichtquelle kann im Allgemeinen davon ausgegangen werden, dass die räumliche Kohärenz stets vorhanden ist.

Die zeitliche Kohärenz besagt, um welchen Betrag zwei oder mehrere Strahlreplika einer Lichtquelle gegeneinander zeitlich verschoben werden können, bis keine sichtbare Interferenz mehr auftritt. Üblicherweise wird die zeitliche Kohärenz mit Hilfe einer Kohärenzlänge angegeben. Diese kann von wenigen Mikrometern (Weißlicht) bis hin zu Kilometern bei stabilisierten Laserlichtquellen betragen.

Die Dekohärenzvorrichtung der erfindungsgemäßen Beleuchtungsanordnung ist ausgestaltet, die räumliche und/oder die zeitliche Kohärenz zweier räumlich und/oder zeitlich kohärenter Teilstrahlenbündel zueinander zu verringern.

Die Dekohärenzvorrichtung kann als Verzögerungsanordnung ausgestaltet sein, wobei die mindestens zwei Teilstrahlengänge zur Propagation von jeweils einem Teilstrahlenbündel unterschiedlich lange optische Weglängen aufweisen. Unterschiedlich lange optische Weglängen haben den Vorteil, dass über diese die zeitliche Kohärenz der Teilstrahlenbündel zueinander verringert werden kann.

Die unterschiedlich langen optischen Weglängen der Teilstrahlengänge bewirken, dass ein Teilstrahlengang relativ zum mindestens einen weiteren Teilstrahlengang zeitlich und in Propagationsrichtung räumlich verzögert wird.

Unterschiedlich lange optischen Weglängen können beispielsweise erreicht werden, indem gleichlange Teilstrahlengänge unterschiedliche Brechzahlen aufweisen oder indem Strahlengänge gleicher Brechzahl verschiedene Längen besitzen. Auch mittels gefalteter Strahlengänge können unterschiedlich lange optische Weglängen erreicht werden. Ebenso ist eine Kombination obiger Vorgehensweisen möglich.

Die erfindungsgemäße Beleuchtungsanordnung kann mindestens einen Lichtwellenleiter umfassen. Ein Lichtwellenleiter hat den Vorteil, dass, im Gegensatz zu einem leicht dejustierbaren gefalteten Strahlengang, das in den Lichtwellenleiter eingekoppelte Licht in diesem bis zu einer Auskoppelfacette des Lichtwellenleiters geführt werden kann.

Der Lichtwellenleiter kann als streifenförmiger Lichtwellenleiter ausgestaltet sein. Bevorzugt kann ein rotationssymmetrischer Lichtwellenleiter in Form eines Lichtleitkabels bzw. einer Faser verwendet werden. Lichtleitkabel haben den Vorteil, dass diese mit unterschiedlichen Lichtleiteigenschaften verfügbar sind und durch ihre Flexibilität sehr einfach große optische Weglängen realisiert werden können. Lichtleitkabel können zum Beispiel auf Spulen aufgewickelt werden und Verzögerungsstrecken von mehreren Metern auf einem Raum in der Größenordnung des von der maximalen Biegung bestimmten minimalen Durchmessers des aufgewickelten Lichtleitkabels gewährleisten.

Zur Vereinfachung der Anordnung der mindestens zwei Teilstrahlengänge zueinander kann jeder der Teilstrahlengänge einen Lichtwellenleiter umfassen, wobei die Lichtwellenleiter der mindestens zwei Teilstrahlengänge eine voneinander unterschiedliche Länge aufweisen können. Durch die unterschiedlichen Laufzeiten durch die Lichtwellenleiter ergibt sich somit am Ausgang der Lichtwellenleiter eine zeitliche Verzögerung der Teilstrahlenbündel zueinander.

In einer weiteren Ausgestaltung der erfindungsgemäßen Beleuchtungsanordnung sind die unterschiedlich langen optischen Weglängen der mindestens zwei Teilstrahlengängen derart ausgestaltet, dass diese eine Längendifferenz aufweisen, die größer oder gleich der Kohärenzlänge des Lichtes der Teilstrahlenbündel ist. Dies hat den Vorteil, dass die Teilstrahlenbündel durch die unterschiedlich langen optischen Weglängen derart gegeneinander zeitlich versetzt werden, dass diese nicht mehr miteinander interferieren können, d.h. dass die in der Beleuchtungsebene zeitgleich eingestrahlten Teilstrahlenbündel keine feste Phasenbeziehung mehr zueinander aufweisen.

Der Unterschied der optischen Weglängen zueinander kann auch als Gangunterschied bezeichnet werden, wobei der Gangunterschied an die jeweilige Kohärenzlänge der verwendeten Lichtquelle angepasst werden kann. Dies kann vorteilhafterweise mittels der oben erwähnten Lichtwellenleiter geschehen, da deren Länge mit geeigneten Anschlussstücken um die Länge weiterer Lichtwellenleiter verlängert bzw. verringert werden kann.

Im Allgemeinen ist die Kohärenzlänge des Beleuchtungsstrahlenbündels identisch mit den Kohärenzlängen der Teilstrahlenbündel, sofern keine Vorkehrungen wie eine geometrische oder spektrale Filterung der Teilstrahlenbündel vorgenommen werden.

Ist zur Einspeisung des Beleuchtungsstrahlenbündels in die Beleuchtungsanordnung eine gepulste Lichtquelle vorgesehen, so weisen in einer weiteren vorteilhaften Ausgestaltung der Beleuchtungsanordnung die optischen Weglängen der mindestens zwei Teilstrahlengänge eine Längendifferenz auf, die größer oder gleich einer Wegstrecke ist, welche das Licht im Vakuum während einer Impulsdauer eines gepulst generierten Beleuchtungsstrahlenbündels zurücklegt. Dies hat den Vorteil, dass die Impulse der Teilstrahlenbündel, welche Impulsreplika des Beleuchtungsstrahlenbündels entsprechen, derart gegeneinander verzögert werden, dass die Impulse der Teilstrahlenbündel in der Beleuchtungsebene die mindestens zwei Teillichtblätter nicht zeitgleich, sondern zeitlich aufeinanderfolgend ausbilden.

Durch diese zeitliche Trennung der Teillichtblätter zueinander können diese nicht mehr miteinander interferieren und eine Streifenbildung aufgrund von Interferenz in der Beleuchtungsebene kann vermieden werden.

Bevorzugt kann der Gangunterschied zwischen den mindestens zwei Teilstrahlenbündeln größer, zum Beispiel um den Faktor zwei größer, gewählt werden als die Wegstrecke, die das Licht im Vakuum während der Impulsdauer zurücklegt.

Ein derartiger größerer Gangunterschied ist insbesondere dann vorteilhaft, wenn die Impulsform des Beleuchtungsstrahlenbündels keine Rechteckform aufweist, sondern einer Pulsform entspricht, die ansteigende und abfallende Flanken aufweist.

Da die Pulsdauern von Impulsen mit zeitlichem Gauss-, Lorentz- oder Sech²-Profil im Allgemeinen als volle Weite bei halbem Maximum (FWHM) gemessen und angegeben wird, kann bei unzureichendem Gangunterschied zwischen den beiden Teilstrahlengängen die abfallende Flanke des zeitlichen Pulsprofils mit der ansteigenden Flanke des zweiten zeitlichen Pulsprofils des zweiten Teilstrahlenbündels interferieren.

Im Dichtegitter wird die akustische Welle bzw. akustische Schwingung bevorzugt durch einen akustischen Oszillator erzeugt, zum Beispiel durch einen Ultraschallwandler. Dieser kann mittels einer Verbindungsschicht mit dem kristallinen Medium bzw. Glas verbunden sein und somit die von ihm erzeugten Schallwellen in das kristalline Medium bzw. das Glas einkoppeln.

Die longitudinal im kristallinen Medium bzw. Glas verlaufende akustische Welle erzeugt an ihren Wellenbergen eine Verdichtung im kristallinen Medium bzw. Glas, die sich mit der Schallwellenlänge periodisch wiederholt.

Das Dichtegitter ist somit als reines Phasengitter zu verstehen, d.h., dass eine auf das Dichtegitter fallender optische Welle lediglich eine Phasenänderung erfährt.

Die zuvor beschriebenen Beugungsgitter können allerdings ebenso Phasengitter mit einer festen periodischen Struktur sein.

Das Dichtegitter kann bevorzugt in einem akustooptischen Element (AOE), wie zum Beispiel einem akustooptischen Modulator (AOM) oder akustooptischen Deflektor (AOD) erzeugt werden, wobei das AOE in verschiedenen Betriebsmodi betrieben werden kann. Wird dieses zum Beispiel in der Bragg-Anordnung betrieben, so bildet sich zusätzlich zur nullten Ordnung lediglich die erste Beugungsordnung heraus. Im Rahmen dieser Anmeldung ist unter einem AOM ein AOE zu verstehen, das einfallendes Licht in Frequenz und/oder Ausbreitungsrichtung und/oder Intensität in Abhängigkeit von der in ihm erzeugten Schallwelle beeinflusst (moduliert). Ein AOD stellt eine spezielle Ausprägungsform eines AOM dar, die auf die Beeinflussung der Ausbreitungsrichtung spezialisiert ist.

Durch die Wahl der Richtung der durch das kristalline Medium bzw. das Glas laufenden akustischen Welle und deren Frequenz kann die Richtung der ersten Beugungsordnung in Bezug zur ursprünglichen Ausbreitungsrichtung des Beleuchtungsstrahlenbündels geändert werden.

In einer weiteren vorteilhaften Ausgestaltung der erfindungsgemäßen Beleuchtungsanordnung werden mindestens zwei Dichtegitter im kristallinen Medium oder im Glas ausgebildet. Dies hat den Vorteil, dass die mindestens zwei im AOE ausgebildeten Dichtegitter unterschiedlicher Periodizität und/oder Ausbreitungsrichtung im kristallinen Medium bzw. im Glas aufweisen können, so dass jedes der mindestens zwei Dichtegitter eine erste Beugungsordnung des Beleuchtungsstrahlenbündels erzeugt, wobei die durch die mindestens zwei Dichtegitter generierten Beugungsordnungen in unterschiedliche Richtungen gebeugt werden können.

Ferner kann die erfindungsgemäße Beleuchtungsanordnung weiter verbessert werden, indem mindestens ein Dichtegitter relativ zum kristallinen Medium oder Glas bewegt ist und indem die vom Dichtegitter erzeugten Beugungsordnungen des Beleuchtungsstrahlenbündels zueinander frequenzverschoben sind.

Dies hat den Vorteil, dass das bewegte Dichtegitter somit zugleich die Dekohärenzvorrichtung darstellt. Da bei Licht gleicher Frequenz auftritt, resultiert eine derartige Frequenzverschiebung nicht in stationären lokalen Intensitätsminima bzw. Intensitätsmaxima in der Beleuchtungsebene, sondern führt lediglich zu einer Schwebung, die mit der Frequenz der Schallwellen, d.h. im Bereich mehrerer 10 bis 100 MHz, auftritt.

Eine Bildaufnahme mit extrem schnellen Kameras mit 10000 oder mehr Bildern pro Sekunde wird somit nicht von dieser Schwebung beeinflusst, da diese durch die im Vergleich zu Schwebung langsamere Aufnahmerate der Kamera gemittelt wird.

Auch die Probenbeleuchtung mit einem durch einen resonanten Scanspiegel (Scanfrequenz zum Beispiel 16 kHz) erzeugten virtuellen Lichtblatt ist somit möglich.

Die Frequenzverschiebung des Lichtes des Beleuchtungsstrahlenbündels erfolgt mit der Frequenz der im kristallinen Medium bzw. Glas propagierenden akustischen Welle, wobei die Frequenz der akustischen Welle je nach Einfallsrichtung des Beleuchtungsstrahlenbündels zur Frequenz des Lichtes des Beleuchtungsstrahlenbündels addiert bzw. von dieser subtrahiert wird.

Schließen die Propagationsrichtungen der akustischen Welle und des Beleuchtungsstrahlenbündels einen Winkel kleiner als 90° ein, so wird die Frequenz des Lichtes des Beleuchtungsstrahlenbündels in der ersten Beugungsordnung um die Frequenz der akustischen Welle reduziert, wohingegen bei einem Winkel zwischen der Propagationsrichtungen der akustischen Welle und der Propagationsrichtung des Beleuchtungsstrahlenbündels größer 90°, die Frequenz des Lichtes des Beleuchtungsstrahlenbündels in der ersten Beugungsordnung um die Frequenz der akustischen Welle erhöht wird.

Die erste Beugungsordnung des Beleuchtungsstrahlenbündels, d.h. das erste Teilstrahlenbündel ist somit gegenüber dem Licht des Beleuchtungsstrahlenbündels dopplerverschoben.

In einer weiteren vorteilhaften Ausgestaltung der erfindungsgemäßen Beleuchtungsanordnung ist das kristalline Medium ein anisotropes kristallines Medium. Dieses dreht die Polarisation des Lichtes der Teilstrahlenbündel relativ zur Polarisation des Lichtes des Beleuchtungsstrahlenbündels. Das anisotrope kristalline Medium kann insbesondere in einem AOE angeordnet sein.

Dies hat den Vorteil, dass unterschiedlich polarisierte Teilstrahlenbündel aufgrund der unterschiedlichen Polarisation eine weiter verminderte Interferenzfähigkeit aufweisen. Dies trägt ferner dazu bei, eine Ausbildung von lokalen Beleuchtungsminima bzw. Beleuchtungsmaxima in der Beleuchtungsebene zu reduzieren bzw. zu verhindern.

Ein anisotropes kristallines Medium, d.h. ein anisotroper Kristall weist abhängig von der Propagationsrichtung des Lichtes im Kristall unterschiedliche Brechungsindices auf. Somit können die Brechungsindices für das Beleuchtungsstrahlenbündel und das Teilstrahlenbündel der ersten Beugungsordnung unterschiedlich sein, da diese in unterschiedlichen Richtungen durch den Kristall propagieren.

Das anisotrope kristalline Medium kann derart orientiert sein, dass die nullte Ordnung, d.h. der Anteil des Lichtes des Beleuchtungsstrahlenbündels, welcher ohne eine Änderung der Propagationsrichtung durch den Kristall propagiert, für jede Polarisation des Lichtes des Beleuchtungsstrahlenbündels den gleichen Brechungsindex erfährt, wohingegen das Teilstrahlenbündel der ersten Beugungsordnung entlang einer Propagationsrichtung durch den Kristall propagiert, in welcher der Brechungsindex abhängig von der Polarisation des Lichtes ist.

Diese Abhängigkeit des Brechungsindex von der Polarisation, d.h. die Doppelbrechung, kann zu einer Polarisationsdrehung des Lichtes der ersten Beugungsordnung führen. Insbesondere kann die Polarisation des Lichtes der ersten Beugungsordnung um 90° zur Polarisation der nullten Beugungsordnung gedreht sein.

Eine Drehung der Polarisation des Lichtes der ersten Beugungsordnung kann insbesondere in anisotropen Kristallen, zum Beispiel von AOEs, erzielt werden, die im sogenannten Scherungsmodus (shear-mode) betrieben werden. In diesem Modus treten Gitterschwingungen senkrecht zur Ausbreitungsrichtung der akustischen Welle auftreten, d.h. dass sich die akustische Welle als Transversalwelle durch das kristalline Medium hindurch bewegt. Nachteilig an diesem Modus ist die verringerte Geschwindigkeit der Transversalwelle im kristallinen Medium um bis zu einem Faktor zehn im Vergleich zu den Longitudinalwellen.

Jede der oben beschriebenen Ausgestaltungen der erfindungsgemäßen Beleuchtungsanordnung kann in einem Mikroskop, insbesondere einem Lichtblatt- oder SPIM- Mikroskop oder Schiefeebenemikroskop wie einem OPM oder SCAPE-Mikroskop installiert sein. Dabei stellen sowohl die räumliche Trennung der mindestens zwei Teilstrahlenbündel als auch die Verringerung der Kohärenz des Lichtes der beiden Teilstrahlenbündel zueinander sicher, dass eine zu mikroskopierende Probe in einer Beleuchtungsebene homogen beleuchtet wird und stark absorbierende bzw. streuende Bereiche der Probe eine verringerte bzw. verhinderte Schattenbildung aufweisen.

Im Folgenden wird die vorliegende Erfindung anhand beigefügter Zeichnungen spezieller Ausführungsformen näher erläutert. Gleiche technische Merkmale bzw. technische Merkmale mit gleichem technischen Effekt bzw. gleicher Funktion sind dabei mit dem gleichen Bezugszeichen versehen. Die technischen Merkmale der im Folgenden gezeigten Ausgestaltungen können beliebig miteinander kombiniert bzw. weggelassen werden, sofern es nicht auf den mit dem technischen Merkmal erzielten technischen Effekt ankommt.

Es zeigen:
Fig. 1 eine schematische Darstellung eines SPIM-Mikroskops mit erfindungsgemäßer Beleuchtungsanordnung;
Fig. 2 eine erste Ausgestaltung der erfindungsgemäßen Beleuchtungsanordnung;
Fig. 3 eine zweite Ausgestaltung der erfindungsgemäßen Beleuchtungsanordnung;
Fig. 4 eine dritte Ausgestaltung der erfindungsgemäßen Beleuchtungsanordnung; und
Fig. 5 eine schematische Darstellung eines SPIM-Mikroskops miterfindungsgemäßer Beleuchtungsanordnung mit verkippten virtuellen Lichtblättern.

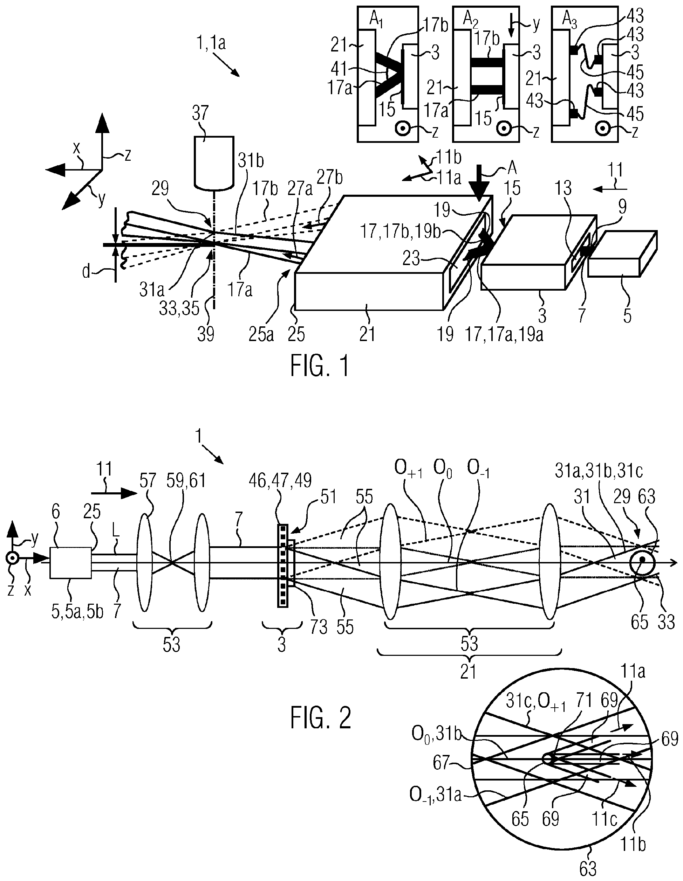

Fig. 1 zeigt die schematische Darstellung eines Mikroskops 1a, insbesondere eines Lichtblattoder SPIM-Mikroskops 1, welches eine erfindungsgemäße Beleuchtungsanordnung 3 umfasst.

Die Erfindung ist beispielhaft anhand eines SPIM-Mikroskops 1 beschrieben, kann allerdings gemäß der beschriebenen Ausgestaltung auch in einem Schiefeebenemikroskop wie einem OPM oder SCAPE-Mikroskop verwendet werden. Ein Schiefeebenemikroskop, OPM oder SCAPE-Mikroskop ist in den Figuren nicht gezeigt.

Ferner umfasst das SPIM-Mikroskop 1 eine Lichtquelle 5, welche ein Beleuchtungsstrahlenbündel 7 entlang eines Beleuchtungsstrahlenganges 9 emittiert.

Das Beleuchtungsstrahlenbündel 7 propagiert entlang einer Propagationsrichtung 11, die für das Beleuchtungsstrahlenbündel 7 parallel zur x-Achse orientiert ist.

Das Beleuchtungsstrahlenbündel 7 wird über einen Beleuchtungseingang 13 in die Beleuchtungsanordnung 3 eingespeist. Die Beleuchtungsanordnung 3 umfasst ferner einen Beleuchtungsausgang 15, über welchen in der in Fig. 1 gezeigten Ausgestaltung des SPIM- Mikroskops 1 zwei Teilstrahlenbündel 17 ausgegeben werden, wobei die Teilstrahlenbündel 17 entlang zweier unterschiedlicher Teilstrahlengänge 19, den Teilstrahlengängen 19a und 19b verlaufen. Die Teilstrahlenbündel 17 sind zur besseren Unterscheidung in ein erstes Teilstrahlenbündel 17a und ein zweites Teilstrahlenbündel 17b unterteilt.

Jedes der zwei Teilstrahlenbündel 17a, 17b propagiert entlang einer jeweiligen Propagationsrichtung 11a bzw. 11b. Beide Propagationsrichtungen 11a, 11b, als auch die Propagationsrichtung 11 des Beleuchtungsstrahlenbündels 7 liegen in einer von der x-Achse und einer y-Achse aufgespannten Ebene.

Die von der Beleuchtungsanordnung 3 über den Beleuchtungsausgang ausgegebenen Teilstrahlenbündel 17a, 17b werden über einen Eingang 23in einen Lichtblattgenerator 21 eingespeist.

Der Lichtblattgenerator 21 transformiert die über den Eingang 23 eingespeisten Teilstrahlenbündel 17a und 17b derart, dass an dessen Ausgang 25 die Teilstrahlenbündel 17a und 17b eine größere Breite b senkrecht zur jeweiligen ausgangsseitigen Propagationsrichtung 27a und 27b aufweisen als an dessen Eingang 23, wobei die Breite b in der x-y-Ebene gemessen wird.

Zur besseren Unterscheidung der Teilstrahlenbündel 17a und 17b auf einer Ausgangsseite 25a des Lichtblattgenerators 21 ist ein Teilstrahlengang 17b gestrichelt gezeichnet.

Beide Teilstrahlengänge 17a und 17b verlaufen auf der Ausgangsseite 25a des Lichtblattgenerators 21 konvergent und weisen jeweils einen Fokusbereich 29 auf, der sich im Wesentlichen in der x-y-Ebene befindet. Entlang einer z-Achse weisen durch den jeweiligen Fokusbereich 29 definierte Teillichtblätter 31a, 31b eine Lichtblattdicke d auf, die deutlich geringer ist als die Ausdehnung der Teillichtblätter 31a, 31b in der x-y-Ebene.

Die Teillichtblätter 31a, 31b definieren eine Beleuchtungsebene 33, in welche beide Lichtblätter 31a, 31b liegen, und die parallel zur x-y-Ebene orientiert ist. Die Beleuchtungsebene 33 ist zugleich eine Fokusebene 35 einer Beobachtungsoptik 37.

Eine optische Achse 39 der Beobachtungsoptik 37 ist parallel zur z-Achse orientiert und steht senkrecht auf der Beleuchtungs- 33 bzw. Fokusebene 35.

In Fig. 1 sind ferner drei Aufsichten A gezeigt, welche einen Bereich zwischen der Beleuchtungsanordnung 3 und dem Lichtblattgenerator 21 darstellen.

Alle drei Aufsichten A zeigen die Ausgabe des Lichtes von der Beleuchtungsanordnung 3 und die Einspeisung des Lichtes in den Lichtblattgenerator 21 entlang einer Richtung entgegen der z-Achse gesehen.

Die Aufsicht AI zeigt eine mögliche Ausgestaltung der Ausgabe der Teilstrahlenbündel 17a und 17b, in welcher beide Teilstrahlenbündel 17a, 17b unter einem Winkel 41 zueinander verlaufen.

Die Aufsicht A₂ zeigt die beiden Teilstrahlenbündel 17a und 17b, welche parallel und zueinander seitlich entlang der y-Achse versetzt von der Beleuchtungsanordnung 3 am Beleuchtungsausgang 15 ausgegeben werden.

Die Aufsicht A₃ zeigt eine weitere Möglichkeit, das Licht von der Beleuchtungsanordnung 3 zum Lichtblattgenerator 21 zu übertragen. Die in der Aufsicht A₃ gezeigte Möglichkeit umfasst Faserkoppler 43, über welche von der Beleuchtungsanordnung 3 Licht in einen Lichtwellenleiter 45 eingekoppelt bzw. aus dem Lichtwellenleiter 45 zum Lichtblattgenerator 21 ausgekoppelt werden kann.

Die in der Aufsicht A₃ gezeigte Möglichkeit zur Lichtübertragung stellt somit eine Möglichkeit dar, einen seitlichen Versatz entlang der y-Achse bzw. einen Winkel 41 zwischen den in den Lichtwellenleitern 45 geleiteten Teilstrahlenbündeln 17a, 17b entsprechend den Anforderungen des Lichtblattgenerators 21 einzustellen.

In Fig. 2 ist eine erste Ausgestaltung der erfindungsgemäßen Beleuchtungsanordnung 3 gezeigt. Diese umfasst in der gezeigten Ausführungsform lediglich ein als Gitter 47 ausgestaltetes beugendes optisches Bauelement 46, welches in Fig. 2 als Transmissionsgitter 49 ausgestaltet ist. In anderen Ausgestaltungen kann ein reflektives Gitter verwendet werden,
Eine periodische Gitterstruktur 51 ist in Fig. 2 lediglich angedeutet.

Die Fig. 2 zeigt ferner die Lichtquelle 5, die als gepulste Lichtquelle 6 ausgestaltet sein kann und welche das Beleuchtungsstrahlenbündel 7 am Ausgang 25 ausgibt und über ein Teleskop 53 aufweitet. Das aufgeweitete Beleuchtungsstrahlenbündel 7 trifft somit auf eine Vielzahl der periodisch angeordneten Gitterstrukturen 51, sodass mehrere Beugungsordnungen 55 in Propagationsrichtung 11 nach dem Gitter 47 erzeugt werden. Gezeigt sind in Fig. 2 die nullte Beugungsordnung O₀ die plus erste Beugungsordnung O₊₁ und die minus erste Beugungsordnung O₋₁.

Die Beugungsordnungen 55 werden in den Lichtblattgenerator 21 eingespeist, von einem Teleskop 53 transformiert und in einem jeweiligen Fokusbereich 29 als Lichtblatt 31 ausgebildet. Das Lichtblatt 31 setzt sich aus Teillichtblättem 31 a-31c zusammen.

In der in Fig. 2 gezeigten Ausgestaltung von Teilen des SPIM-Mikroskops 1 ist der Lichtblattgenerator 21 vereinfacht dargestellt. Ferner weist das der Lichtquelle 5 nachgeschaltete Teleskop 53 eine Zylinderlinse 57 auf, welche das von der Lichtquelle 5 ausgesandte Beleuchtungsstrahlenbündel 7 entlang der y-Achse, nicht aber entlang der z-Achse kollimiert. Ein im Teleskop 53 erzeugtes Zwischenbild 59 ist somit ein Linienfokus 61, der sich entlang der z-Achse erstreckt.

Im Fokusbereich 29, in welchem die Teillichtblätter 31a-31c überlappen, befindet sich eine Probe 63, die von den Teillichtblättern 31a-31c in der Beleuchtungsebene 33 beleuchtet wird.

Die Probe 63 weist einen stark absorbierenden bzw. streuenden Bereich 65 auf, der im Folgenden als Störstelle 65 bezeichnet wird.

Der Bereich der Störstelle 65 ist in einer Vergrößerung 67 vergrößert dargestellt, wobei die drei die Probe 63 beleuchtenden Lichtblätter 31a, 31b, 31c schematisch als Streifen dargestellt sind. Wie die Fig. 2 zeigt, erstrecken sich die jeweiligen Lichtblätter 31 über den kompletten in der Vergrößerung 67 gezeigten Bereich, sodass ohne diese schematische Darstellung eine Unterscheidung zwischen den einzelnen Lichtblättern 31a, 31b und 31c nicht möglich wäre.

Das Lichtblatt 31a wird durch die minus erste Beugungsordnung O₋₁, das zweite Lichtblatt 31b durch die nullte Ordnung O₀ und das dritte Lichtblatt 31c durch die plus erste Ordnung O₊₁ ausgebildet.

Die Lichtblätter 31 a-31c treffen auf die Störstelle 65 und bilden einen jeweiligen Schatten 69, der sich streifenförmig in die jeweilige Propagationsrichtung 11 a-11 c erstreckt, aus.

Die Beleuchtung der Probe 63 aus unterschiedlichen Propagationsrichtungen 11 a-11c erlaubt es, einen Kernschatten 71 zu minimieren bzw. gänzlich zu vermeiden. Der Kernschatten 71 ist im Wesentlichen entlang der Propagationsrichtungen 11 a-11c hinter der Störstelle 65 ausgebildet und in der Vergrößerung 67 flächig ausgefüllt gezeichnet.

Die in Fig. 2 gezeigte Lichtquelle 5 kann eine Laserlichtquelle 5a sein, wobei diese bevorzugt eine breitbandige Laserlichtquelle 5b ist.

Die breitbandige Laserlichtquelle 5b der Fig. 2 generiert das Licht des Beleuchtungsstrahlenbündel 7 mit einer bandbreitenabhängigen Kohärenzlänge L, welche zur Ausbildung von Interferenz (nicht gezeigt) im Fokusbereich 29 führen kann, sofern keine Dekohärenzvorrichtung 73 vorgesehen ist.

Die Dekohärenzvorrichtung 73 ist in Fig. 2 lediglich schematisch dargestellt. Mit der Dekohärenzvorrichtung 73 wird eine Ausbildung von Interferenzen in der Beleuchtungsebene 33 vermieden, sodass eine homogene Beleuchtung der Probe 63 in der Beleuchtungsebene 33 möglich ist.

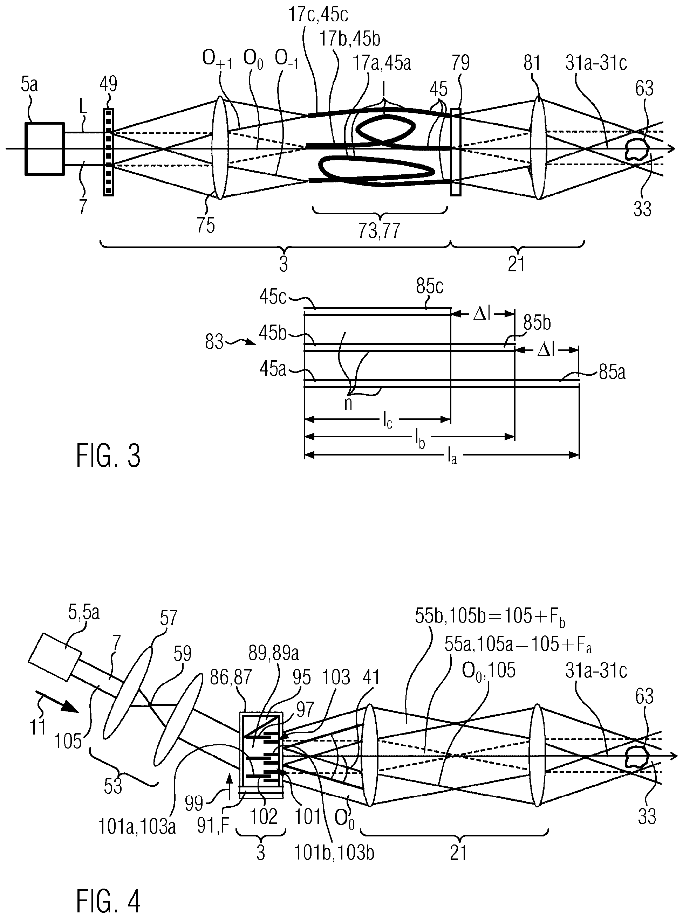

In der Fig. 3 ist eine zweite Ausgestaltung der erfindungsgemäßen Beleuchtungsanordnung 3 gezeigt, wobei die Beleuchtungsanordnung 3 in dieser Ausgestaltung sowohl das Gitter 47, eine Einkoppellinse 75 und eine Verzögerungsanordnung 77 umfasst.

Der Lichtblattgenerator 21 umfasst schematisch dargestellte weitere optische Bauelemente 79, die zum Beispiel die zuvor erwähnte Zylinderlinse 57 umfassen und die linienförmigen Zwischenbilder 59 generieren. Ferner umfasst der Lichtblattgenerator 21 eine Beleuchtungslinse 81, mit der die Teillichtblätter 31a-31c in der Probe 63 generiert werden.

Die prinzipielle Beleuchtung der Probe 63 in der Beleuchtungsebene 33 erfolgt wie zuvor in Fig. 2 beschrieben.

Die Verzögerungsanordnung 77 der in Fig. 3 gezeigten Ausgestaltung der Beleuchtungsanordnung 3 stellt die Dekohärenzvorrichtung 73 dar und umfasst drei Lichtwellenleiter 45, in denen jeweils ein Teilstrahlenbündel 17a-17c propagiert.

In der in Fig. 3 gezeigten Ausgestaltung wird die minus erste Beugungsordnung O₋₁ umfassende erste Teilstrahlenbündel 17a in einen ersten Lichtwellenleiter 45a eingekoppelt. Entsprechend werden das zweite 17b und dritte Teilstrahlenbündel 17c in einen zweiten 45b bzw. dritten Wellenleiter 45c eingekoppelt. Entsprechende Faserkoppler 43 (siehe Fig. 1) sind in der schematischen Darstellung der Fig. 3 nicht gezeigt.

Die über die Lichtwellenleiter 45a-45c geleiteten Teilstrahlenbündel 17a-17c werden in den Lichtblattgenerator 21 eingespeist.

Die Fig. 3 zeigt ferner, dass die Lichtwellenleiter 45 eine unterschiedliche Länge l aufweisen, was in Fig. 3 im gestreckten Zustand 83 der Lichtwellenleiter 45a-45c dargestellt ist.

Die Lichtwellenleiter 45a-45c der in Fig. 3 gezeigten Ausgestaltung der Beleuchtungsanordnung 3 weisen die gleiche Brechzahl n des verwendeten Materials des Lichtwellenleiters 45 auf. Allerdings unterscheiden sich die Lichtwellenleiter 45a-45c in ihren Längen lₐ-l_{c}, so dass sich für die drei Lichtwellenleiter 45a-45c eine Längendifferenz Δl und unterschiedliche optische Weglängen 85a, 85b und 85c ergeben. Bei den in Fig. 3 gezeigten Lichtwellenleitern 45a-45c ergibt sich die jeweilige optische Weglänge 85a-85c durch Multiplikation der entsprechenden Länge lₐ-l_{c} mit der jeweiligen, im gezeigten Fall identischen Brechzahl n.

Die Verzögerungsanordnung 77 der Fig. 3 bewirkt, dass die unterschiedlichen Beugungsordnungen O₋₁, O₀, O₊₁ gegeneinander verzögert werden und zu unterschiedlichen Zeitpunkten in den Lichtblattgenerator 21 eingespeist werden. Dabei ist die Verzögerung zwischen den Lichtwellenleitern 45a-45c derart gewählt, dass die in der Verzögerungsstrecke 77 erzeugte zeitliche Verzögerung einer Wegstrecke von Licht im Vakuum entspricht, die größer oder gleich der Kohärenzlänge L des von der Laserlichtquelle 5b ausgesandten Beleuchtungsstrahlenbündels 7 ist. Diese Wegstrecke ist näherungsweise die Längendifferenz ΔI. Somit wird in der Beleuchtungsebene 33 eine Interferenz der Lichtblättern 31a-31c verhindert.

Die Lichtwellenleiter 45a-45c der Verzögerungsanordnung 77 können auf einfache Weise gegen Lichtwellenleiter 45 größerer bzw. kleinerer Länge l ausgetauscht werden. Wie am Beispiel des Lichtwellenleiters 45a angedeutet, können die Lichtwellenleiter 45 platzsparend aufgerollt werden. Somit kann mittels der Verzögerungsanordnung 77 eine Anpassung an verschiedene Kohärenzlängen L der Laserlichtquelle 5a erfolgen.

Die Fig. 4 zeigt eine dritte Ausgestaltung der erfindungsgemäßen Beleuchtungsanordnung 3.

Auch in dieser Ausgestaltung erzeugt eine Lichtquelle 5 bzw. eine Laserlichtquelle 5a ein Beleuchtungsstrahlenbündel 7, welches mittels der Zylinderlinse 57, die sich im Teleskop 53 befindet, ein Zwischenbild 59 erzeugt und das Beleuchtungsstrahlenbündel 7 aufweitet.

Das aufgeweitete Beleuchtungsstrahlenbündel 7 wird in ein akustooptisches Element (AOE) 86 eingespeist. Das AOE 86 kann zum Beispiel ein akustooptischer Modulator (AOM) 87 (und insbesondere ein akustooptischer Deflektor (AOD)) sein, wie in Fig. 3 dargestellt.

Der AOM 87 umfasst ein kristallines Medium oder Glas 89, einen Schallwandler 91, Ansteuerelektronik 93 und einen Absorberbereich 95.

Der Schallwandler 91 wird mittels eines nicht gezeigten Frequenzgenerators angesteuert und erzeugt im kristallinen Medium oder Glas 89 Schallwellen 97, die sich entlang einer Abstrahlrichtung 99 im kristallinen Medium oder Glas 89 fortpflanzen. Diese Longitudinal- Schallwellen 97 bilden ein Dichtegitter 101 aus, welches dadurch gekennzeichnet ist, dass es periodische Abschnitte komprimierter Bereiche 102 des kristallinen Mediums oder Glas 89 aufweist.

In der in Fig.4 gezeigten Ausgestaltung der Beleuchtungsanordnung 3 generiert der Schallwandler 91 ein erstes Dichtegitter 101a und ein zweites Dichtegitter 101b. Diese sind lediglich aus Gründen der Sichtbarkeit zueinander versetzt im kristallinen Medium oder Glas 89 eingezeichnet.

Die unterschiedlichen Dichtegitter 101a und 101b unterscheiden sich im Wesentlichen in der sie erzeugenden Frequenz F, mit der der Schallwandler 91 betrieben wird.

Das erste Dichtegitter 101a wird mit einer Frequenz Fₐ betrieben, die geringer ist als eine Frequenz F_{b}, mit welcher das zweite Dichtegitter 101b erzeugt wird. Dies äußert sich in einer unterschiedlichen Raumfrequenz 103 der komprimierten Bereiche.

Das in Fig. 4 in den AOM 87 einfallende Beleuchtungsstrahlenbündel 7 wird gemäß der Bragg-Bedingung gebeugt, wobei im Gegensatz zu einem in den Fig. 2 und 3 verwendeten Gitter 49 eine einzelne Beugungsordnung 55 pro Dichtegitter 101 erzeugt wird.

Des Weiteren zeigt die Fig. 4 die nullte Beugungsordnung O₀, welche identisch für beide Dichtegitter 101a, 101b ist.

Das mit der niedrigeren Frequenz Fₐ erzeugte Dichtegitter 101a weist eine geringere Raumfrequenz 103a auf als das Dichtegitter 101b, welches mit einer höheren Frequenz Fb vom Schallwandler 91 erzeugt wird und ebenso eine höhere Raumfrequenz 103b aufweist.

Die Beugungsordnung 55a wird durch das Dichtegitter 101a erzeugt und ist im Vergleich zur nullten Ordnung O₀ unter einem kleineren Winkel 41 gebeugt als die Beugungsordnung 55b des Dichtegitters 101b.

Die Dichtegitter 101 sind in Bezug zum kristallinen Medium oder Glas 89 entlang der Abstrahlrichtung 99 bewegt, so dass die Lichtfrequenz 105 des Beleuchtungsstrahlenbündels 7 in der nullten Ordnung O₀ beibehalten, in den Beugungsordnungen 55a und 55b jedoch um die jeweilige Frequenz Fₐ bzw. F_{b} verschoben wird, wobei sich eine Lichtfrequenz 105a bzw. eine Lichtfrequenz 105b als Summe der Lichtfrequenz 105 und der jeweiligen Frequenz Fₐ bzw. F_{b} ergibt.

Da die Propagationsrichtung 11 des Beleuchtungsstrahlenbündels 7 zumindest anteilig entgegengesetzt zur Abstrahlungsrichtung 99 der im kristallinen Medium oder Glas 89 verlaufenden Schallwellen 97 verläuft, erhöht sich die Lichtfrequenz 105a und 105b der Beugungsordnungen 55a und 55b. In anderen Ausgestaltungen kann die Abstrahlrichtung 99 der Schallwellen 97 entgegengesetzt zu der in Fig. 4 gezeigten Abstrahlrichtung 99 orientiert sein, wobei sich bei einer solchen Anordnung die Lichtfrequenzen 105a und 105b um die entsprechenden Frequenzen Fₐ bzw. F_{b} verringern.

Die vom Lichtblattgenerator 21 erzeugten Teillichtblätter 31a-31c beleuchten zeitgleich die Beleuchtungsebene 33 der Probe 63. Da sich die Lichtfrequenzen 105, 105a und 105b jedoch unterscheiden, treten in der Beleuchtungsebene 33 keine stationären Interferenzmuster auf.

Aufgrund des Frequenzunterschiedes kommt es in der Beleuchtungsebene 33 jedoch zu einer interferenzartigen Schwebung, die eine Schwebungsfrequenz in der Größenordnung der Frequenzen Fₐ bzw. F_{b} aufweist.

Diese ist im Vergleich zu gängigen Aufnahmeraten von Kameras, welche zur Aufnahme der Beleuchtungsebene 33 verwendet werden, sehr hoch, so dass die Kamera stets die Schwebungsfrequenz mittelt und diese somit nicht detektiert.

Ferner ist es möglich, dass das kristalline Medium 89 ein anisotropes kristallines Medium 89a ist, welches die Polarisation der Beugungsordnung 55a bzw. 55b relativ zur Polarisation der nullten Ordnung O₀ dreht.

Um die Polarisationsdrehung durch ein anisotropes kristallines Medium 89 a zu nutzen, ist jedoch eine zur in Fig. 4 gezeigten Anordnung verschiedene Orientierung des AOM 87 bzw. der Propagationsrichtung 11 des Beleuchtungsstrahlenbündels 7 notwendig. Dies ist in Fig. 4 nicht gezeigt.

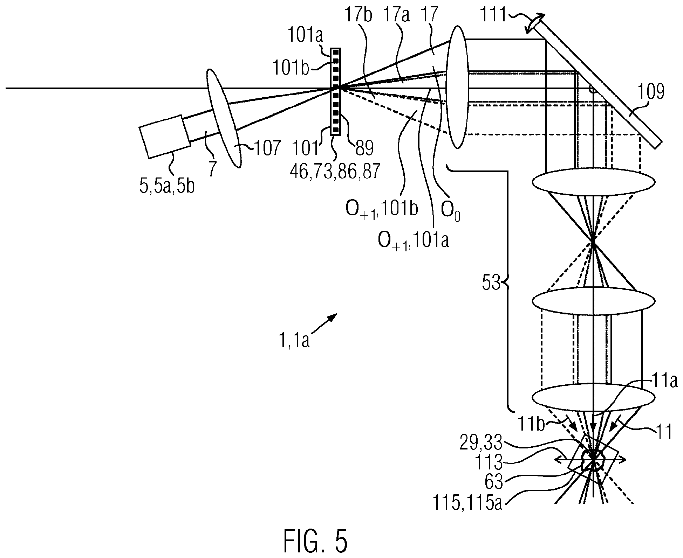

In Fig. 5 ist ein Lichtblatt- oder SPIM- Mikroskop 1 schematisch dargestellt. Die Lichtquelle 5, welche eine Laserlichtquelle 5a bzw. eine breitbandige Laserlichtquelle 5b sein kann, emittiert das Beleuchtungsstrahlenbündel 7, welches durch eine Linse 107 hindurch tritt und von dieser fokussiert wird. Die Linse 107 kann eine sphärische Linse 107a oder eine asphärische Linse 107b sein.

Das Beleuchtungsstrahlenbündel 7 wird auf ein beugendes optisches Bauelement 46 fokussiert, wobei das beugende optische Bauelement 46 in Figur 5 ein AOE 86, insbesondere ein AOM 87 ist, in dessen kristallinen Medium oder Glas 89 Dichtegitter 101 erzeugt werden.

Das AOE 86 erzeugt die nullte Beugungsordnung O₀, die plus erste Beugungsordnung O₊₁ des ersten Dichtegitters 101a und die plus erste Beugungsordnung O₊₁ des zweiten Dichtegitters 101b. Das erste und zweite Dichtegitter 101a, 101b sind in Fig. 5 lediglich angedeutet, siehe hierzu Fig. 4. Ähnlich dem AOE 86 der Fig. 4 stellt dieses die Dekohärenzvorrichtung 73 dar.

Die obigen Beugungsordnungen stellen die Teilstrahlenbündel 17, 17a und 17b dar, welche entlang der Teilstrahlengänge 19, 19a und 19b verlaufen und von einem Kippspiegel 109, der entlang einer Verkipprichtung 111 verkippbar ist, im Wesentlichen um 90° abgelenkt werden.

Mit Hilfe des Teleskops 53 werden die Teilstrahlenbündel 17, 17a und 17b in die Beleuchtungsebene 33 in der Probe 63 fokussiert, wobei eine Verkippung der Teilstrahlenbündel 17, 17a und 17b entlang der Verkipprichtung 111 dazu führt, dass die Fokusbereiche 29 der Teilstrahlenbündel 17, 17a und 17b entlang einer Scanrichtung 113 in der Probe 63 gescannt, d.h. bewegt werden.

Da das Scannen in der Probe 63 schnell gegenüber der Integrationszeit eines nicht gezeigten Detektors ist, entsteht durch die Bewegung der Fokusbereiche für jeden der Teilstrahlenbündel 17,17a und 17b ein sogenanntes virtuelles Lichtblatt 115, welches für das Teilstrahlenbündel 17 zu einem angedeuteten ersten virtuellen Lichtblatt 115a führt.

Da die Teilstrahlenbündel 17,17a und 17b entlang unterschiedlicher Propagationsrichtungen 11, 11a, 11b in die Probe 63 fokussiert werden, beleuchten die ausgebildeten virtuellen Lichtblätter 115 die Probe 63 aus unterschiedlichen Richtungen.

## Patentansprüche

1. Beleuchtungsanordnung (3) für ein Lichtblatt- oder SPIM-Mikroskop (1) oder ein Schiefeebenenmikroskop wie ein OPM oder SCAPE-Mikroskop, umfassend einen Beleuchtungseingang (13) zur Einspeisung eines Beleuchtungsstrahlenbündels (7) und einen Beleuchtungsausgang (15) zur Ausgabe von mindestens zwei aus dem Beleuchtungsstrahlenbündel (7) generierten Teilstrahlbündeln (17), wobei die Beleuchtungsanordnung (3) mindestens ein beugendes optisches Bauelement (46) zur Teilung des Beleuchtungsstrahlenbündels (7) in die mindestens zwei entlang von Teilstrahlengängen (19) propagierende Teilstrahlenbündel (17) und zur relativen Änderung der Propagationsrichtungen (11) der mindestens zwei Teilstrahlenbündel (17) zueinander umfasst, so dass die von der Beleuchtungsanordnung (3) ausgegebenen mindestens zwei Teilstrahlenbündel (17) am Beleuchtungsausgang (15) nichtkollinear zueinander verlaufen, wobei die Beleuchtungsanordnung (3) eine Dekohärenzvorrichtung (73) zur Verringerung der Kohärenz des Lichtes der Teilstrahlenbündel (17) zueinander umfasst, **dadurch gekennzeichnet, dass** das beugende optische Bauelement (46) mindestens ein Gitter (47) aufweist, welches als Dichtegitter (101) in einem kristallinen Medium oder Glas (89) ausgebildet ist.

2. Beleuchtungsanordnung (3) nach Anspruch 1, **dadurch gekennzeichnet, dass** die Beleuchtungsanordnung (3) eine einzelne gepulste Lichtquelle (6) umfasst, an deren Ausgang (25) ein gepulstes Beleuchtungsstrahlenbündel (7) ausgegeben und in den Beleuchtungseingang (13) eingespeist wird.

3. Beleuchtungsanordnung (3) nach Anspruch 1 oder 2, **dadurch gekennzeichnet, dass** jedes der mindestens zwei Teilstrahlenbündel (17) durch eine unterschiedliche, durch das beugende optische Bauelement (46) erzeugte Beugungsordnung (55) des Lichtes des Beleuchtungsstrahlenbündels (7) geformt ist.

4. Beleuchtungsanordnung (3) nach einem der Ansprüche 1 bis 3, **dadurch gekennzeichnet, dass** die Dekohärenzvorrichtung (73) als Verzögerungsanordnung (77) ausgestaltet ist und dass die mindestens zwei Teilstrahlengänge (17) zur Propagation von jeweils einem Teilstrahlenbündel (17) unterschiedlich lange optische Weglängen (85) aufweisen.

5. Beleuchtungsanordnung (3) nach Anspruch 4, **dadurch gekennzeichnet, dass** die Verzögerungsanordnung (77) mindestens einen Lichtwellenleiter (45) umfasst.

6. Beleuchtungsanordnung (3) nach Anspruch 4 oder 5, **dadurch gekennzeichnet, dass** die optischen Weglängen (85) der mindestens zwei Teilstrahlengänge (17) eine Längendifferenz (ΔI) aufweisen, die größer oder gleich der Kohärenzlänge (L) des Lichtes der Teilstrahlenbündel (17) ist.

7. Beleuchtungsanordnung (3) nach einem der Ansprüche 4 bis 6, **dadurch gekennzeichnet, dass** die optischen Weglängen (85) der mindestens zwei Teilstrahlengänge (17) eine Längendifferenz (ΔI) aufweisen, die größer oder gleich einer Wegstrecke ist, welche das Licht im Vakuum während einer Impulsdauer eines gepulst generierten Beleuchtungsstrahlenbündels (7) zurücklegt.

8. Beleuchtungsanordnung (3) nach einem der Ansprüche 1 bis 7, **dadurch gekennzeichnet, dass** mindestens zwei Dichtegitter (101a, 101b) im kristallinen Medium oder Glas ausgebildet sind.

9. Beleuchtungsanordnung (3) nach einem der Ansprüche 1 bis 8, **dadurch gekennzeichnet, dass** das mindestens eine Dichtegitter (101) relativ zum kristallinen Medium oder Glas (89) bewegt ist und dass die vom Dichtegitter (101) erzeugten Beugungsordnungen (55) des Beleuchtungsstrahlenbündels (7) zueinander frequenzverschoben sind.

10. Beleuchtungsanordnung (3) nach einem der Ansprüche 1 bis 9, **dadurch gekennzeichnet, dass** das kristalline Medium (89) ein anisotropes kristallines Medium (89a) ist, welches die Polarisation des Lichtes der Teilstrahlenbündel (17) relativ zur Polarisation des Lichtes des Beleuchtungsstrahlenbündels (7) dreht.

11. Mikroskop (1a), umfassend eine Beleuchtungsanordnung (3) nach einem der Ansprüche 1 bis 10, wobei das Mikroskop (1a) ein Lichtblatt- oder SPIM-Mikroskop (1) oder eine Schiefeebenenmikroskop wie ein OPM oder SCAPE-Mikroskop ist.

12. Verfahren zur homogenen Ausleuchtung einer Probe (63) in einem Lichtblatt- oder SPIM-Mikroskop (1) oder einem Schiefeebenenmikroskop wie einem OPM oder SCAPE-Mikroskop, umfassend das Generieren eines Beleuchtungsstrahlenbündels (7), das Propagieren des Beleuchtungsstrahlenbündels (7) entlang eines Beleuchtungsstrahlenganges (9), das Beugen und Teilen des Beleuchtungsstrahlenbündels (7) an einem beugenden optischen Bauelement (46), das mindestens ein Gitter aufweist, welches als Dichtgitter (101) in einem kristallinen Medium oder Glas (89) ausgebildet ist, in mindestens zwei entlang von Teilstrahlengängen (19) mit unterschiedlichen Propagationsrichtungen (11a, 11b) propagierende Teilstrahlenbündel (17), das Verringern der Kohärenz des Lichtes der mindestens zwei Teilstrahlenbündel (17) zueinander mittels einer Dekohärenzvorrichtung (17) und das Einstrahlen der Teilstrahlenbündel (17) aus unterschiedlichen Richtungen in eine gemeinsame Beleuchtungsebene (33).

## Claims

1. Illumination arrangement (3) for a light-sheet or SPIM microscope (1) or an oblique plane microscope such as an OPM or SCAPE microscope, comprising an illumination input (13) for feeding in an illumination beam bundle (7) and an illumination output (15) for outputting at least two partial beam bundles (17) generated from the illumination beam bundle (7), wherein the illumination arrangement (3) comprises at least one diffractive optical element (46) for splitting the illumination beam bundle (7) into the at least two partial beam bundles (17) propagating along partial beam paths (19) and for relative change of the propagation directions (11) of the at least two partial beam bundles (17) with respect to one another, so that the at least two partial beam bundles (17) output by the illumination arrangement (3) extend non-collinearly with respect to one another at the illumination output (15), wherein the illumination arrangement (3) comprises a decoherence device (73) for reducing the coherence of the light of the partial beam bundles (17) with respect to one another, **characterized in that** the diffractive optical element (46) has at least one grating (47), which is formed as a density grating (101) in a crystalline medium or glass (89).

2. Illumination arrangement (3) according to claim 1, **characterized in that** the illumination arrangement (3) comprises a single pulsed light source (6), at the output (25) of which a pulsed illumination beam bundle (7) is output and fed into the illumination input (13).

3. Illumination arrangement (3) according to claim 1 or 2, **characterized in that** each of the at least two partial beam bundles (17) is formed by a different diffraction order (55), generated by the diffractive optical element (46), of the light of the illumination beam bundle (7).

4. Illumination arrangement (3) according to one of claims 1 to 3, **characterized in that** the decoherence device (73) is configured as a delay arrangement (77) and **in that** the at least two partial beam paths (17) for propagation of one partial beam bundle (17) in each case have optical path lengths (85) of different lengths.

5. Illumination arrangement (3) according to claim 4, **characterized in that** the delay arrangement (77) comprises at least one optical waveguide (45).

6. Illumination arrangement (3) according to claim 4 or 5, **characterized in that** the optical path lengths (85) of the at least two partial beam paths (17) have a length difference (ΔI) which is greater than or equal to the coherence length (L) of the light of the partial beam bundles (17).

7. Illumination arrangement (3) according to one of claims 4 to 6, **characterized in that** the optical path lengths (85) of the at least two partial beam paths (17) have a length difference (ΔI) which is greater than or equal to a distance which the light travels in vacuum during a pulse duration of a pulsedly generated illumination beam bundle, (7).

8. Illumination arrangement (3) according to one of claims 1 to 7, **characterized in that** at least two density gratings (101a, 101b) are formed in the crystalline medium or glass.

9. Illumination arrangement (3) according to one of claims 1 to 8, **characterized in that** the at least one density grating (101) is moved relative to the crystalline medium or glass (89) and **in that** the diffraction orders (55) of the illumination beam bundle (7) generated by the density grating (101) are frequency-shifted with respect to one another.

10. Illumination arrangement (3) according to one of claims 1 to 9, **characterized in that** the crystalline medium (89) is an anisotropic crystalline medium (89a), which rotates the polarisation of the light of the partial beam bundles (17) relative to the polarisation of the light of the illumination beam bundle (7).

11. Microscope (1a), comprising an illumination arrangement (3) according to one of claims 1 to 10, wherein the microscope (1a) is a light-sheet or SPIM microscope (1) or an oblique plane microscope such as an OPM or SCAPE microscope.

12. Method for homogeneous illumination of a sample (63) in a light-sheet or SPIM microscope (1) or an oblique plane microscope such as an OPM or SCAPE microscope, comprising generating an illumination beam bundle (7), propagating the illumination beam bundle (7) along an illumination beam path (9), diffracting and splitting the illumination beam bundle (7) at a diffractive optical element (46), which has at least one grating, which is formed as a density grating (101) in a crystalline medium or glass (89), into at least two partial beam bundles (17) propagating along partial beam paths (19) with different propagation directions (11a, 11b), reducing the coherence of the light of the at least two partial beam bundles (17) with respect to one another by means of a decoherence device (17) and irradiating the partial beam bundles (17) from different directions into a common illumination plane (33).

## Revendications

1. Système d'éclairage (3) pour un microscope à feuille de lumière ou microscope SPIM (1) ou un microscope à plan incliné tel qu'un microscope OPM ou SCAPE, comprenant une entrée d'éclairage (13) pour l'injection d'un faisceau de rayons d'éclairage (7) et une sortie d'éclairage (15) pour la sortie d'au moins deux faisceaux de rayons partiels (17) générés à partir du faisceau de rayons d'éclairage (7), dans lequel le système d'éclairage (3) comprend au moins un élément optique diffractif (46) pour la division du faisceau de rayons d'éclairage (7) en au moins deux faisceaux de rayons partiels (17) se propageant le long de trajectoires de faisceau partiel (19) et pour la modification relative des directions de propagation (11) des au moins deux faisceaux de rayons partiels (17) l'un par rapport à l'autre, de telle sorte que les au moins deux faisceaux de rayons partiels (17) sortis par le système d'éclairage (3) s'étendent à la sortie d'éclairage (15) de manière non colinéaire l'un par rapport à l'autre, dans lequel le système d'éclairage (3) comprend un dispositif de décohérence (73) pour la réduction de la cohérence de la lumière des faisceaux de rayons partiels (17) l'un par rapport à l'autre, **caractérisé en ce que** l'élément optique diffractif (46) présente au moins un réseau (47), lequel est réalisé en tant que réseau de densité (101) dans un milieu cristallin ou verre (89).

2. Système d'éclairage (3) selon la revendication 1, **caractérisé en ce que** le système d'éclairage (3) comprend une source lumineuse pulsée unique (6), à la sortie (25) de laquelle un faisceau de rayons d'éclairage pulsé (7) est sorti et injecté dans l'entrée d'éclairage (13).

3. Système d'éclairage (3) selon la revendication 1 ou la revendication 2, **caractérisé en ce que** chacun des au moins deux faisceaux de rayons partiels (17) est formé par un ordre de diffraction (55) différent de la lumière du faisceau de rayons d'éclairage (7), généré par l'élément optique diffractif (46).

4. Système d'éclairage (3) selon l'une des revendications 1 à 3, **caractérisé en ce que** le dispositif de décohérence (73) est configuré en tant qu'agencement de retard (77) et **en ce que** les au moins deux trajectoires de faisceau partiel (17) pour la propagation de respectivement un faisceau de rayons partiel (17) présentent des longueurs de trajet optique (85) de longueurs différentes.

5. Système d'éclairage (3) selon la revendication 4, **caractérisé en ce que** l'agencement de retard (77) comprend au moins un guide d'onde optique (45).

6. Système d'éclairage (3) selon la revendication 4 ou la revendication 5, **caractérisé en ce que** les longueurs de trajet optique (85) des au moins deux trajectoires de faisceau partiel (17) présentent une différence de longueur (ΔI) qui est supérieure ou égale à la longueur de cohérence (L) de la lumière des faisceaux de rayons partiels (17).

7. Système d'éclairage (3) selon l'une des revendications 4 à 6, **caractérisé en ce que** les longueurs de trajet optique (85) des au moins deux trajectoires de faisceau partiel (17) présentent une différence de longueur (ΔI) qui est supérieure ou égale à une distance, que la lumière parcourt dans le vide pendant une durée d'impulsion d'un faisceau de rayons d'éclairage (7) généré de manière pulsée.

8. Système d'éclairage (3) selon l'une des revendications 1 à 7, **caractérisé en ce qu'au** moins deux réseaux de densité (101a, 101b) sont réalisés dans le milieu cristallin ou verre.

9. Système d'éclairage (3) selon l'une des revendications 1 à 8, **caractérisé en ce qu'au** moins un réseau de densité (101) est déplacé relativement au milieu cristallin ou verre (89) et **en ce que** les ordres de diffraction (55) du faisceau de rayons d'éclairage (7) générés par le réseau de densité (101) sont décalés en fréquence l'un par rapport à l'autre.

10. Système d'éclairage (3) selon l'une des revendications 1 à 9, **caractérisé en ce que** le milieu cristallin (89) est un milieu cristallin anisotrope (89a), lequel tourne la polarisation de la lumière des faisceaux de rayons partiels (17) relativement à la polarisation de la lumière du faisceau de rayons d'éclairage (7).

11. Microscope (1a), comprenant un système d'éclairage (3) selon l'une des revendications 1 à 10, dans lequel le microscope (1a) est un microscope à feuille de lumière ou microscope SPIM (1) ou un microscope à plan incliné tel qu'un microscope OPM ou SCAPE.

12. Procédé pour l'éclairage homogène d'un échantillon (63) dans un microscope à feuille de lumière ou microscope SPIM (1) ou un microscope à plan incliné tel qu'un microscope OPM ou SCAPE, comprenant la génération d'un faisceau de rayons d'éclairage (7), la propagation du faisceau de rayons d'éclairage (7) le long d'une trajectoire de faisceau d'éclairage (9), la diffraction et la division du faisceau de rayons d'éclairage (7) sur un élément optique diffractif (46), qui présente au moins un réseau, lequel est réalisé en tant que réseau de densité (101) dans un milieu cristallin ou verre (89), en au moins deux faisceaux de rayons partiels (17) se propageant le long de trajectoires de faisceau partiel (19) avec différentes directions de propagation (11a, 11b), la réduction de la cohérence de la lumière des au moins deux faisceaux de rayons partiels (17) l'un par rapport à l'autre au moyen d'un dispositif de décohérence (17) et l'irradiation des faisceaux de rayons partiels (17) à partir de différentes directions dans un plan d'éclairage commun (33).
